# NEUE EUROPÄISCHE PATENTSCHRIFT

(11) **EP 2 582 443 B2**
(45) Veröffentlichungstag und Bekanntmachung des Hinweises auf die Entscheidung über den Einspruch: **15.05.2019**
(45) Hinweis auf die Patenterteilung: 13.08.2014
(21) Anmeldenummer: 11724649.6
(22) Anmeldetag: 14.06.2011
(51) Int. Cl.: B01D 46/52, B01D 46/00, B01D 46/10, B01D 46/42

(54) **FILTERANORDNUNG, INSBESONDERE LUFTFILTERANORDNUNG**
FILTER ARRANGEMENT, IN PARTICULAR AIR FILTER ARRANGEMENT
ENSEMBLE FILTRE, EN PARTICULIER ENSEMBLE FILTRE À AIR

(30) Priorität: 29.09.2010 DE 102010041657; 16.06.2010 DE 102010023972
(43) Veröffentlichungstag der Anmeldung: 24.04.2013
(73) Patentinhaber: Mahle International GmbH, 70376 Stuttgart (DE)
(72) Erfinder: ROTHER, Thilo, 70372 Stuttgart (DE); TRAUB, Matthias, 71034 Böblingen (DE)
(74) Vertreter: BRP Renaud & Partner mbB Rechtsanwälte Patentanwälte Steuerberater
(86) Internationale Anmeldenummer: PCT/EP2011/059801
(87) Internationale Veröffentlichungsnummer: WO 2011/157687

(56) Entgegenhaltungen:
- EP-A1- 0 068 662
- WO-A1-2006/009766
- DE-A1- 10 328 002
- DE-A1- 19 856 520
- DE-A1-102004 054 274
- DE-A1-102007 024 287
- FR-A1- 2 935 102
- JP-A- S5 718 451
- JP-A- 61 275 562
- JP-A- S59 119 055
- US-A- 4 640 698
- US-B1- 6 814 660

## Beschreibung

Die Erfindung bezieht sich auf eine Filteranordnung, insbesondere eine Luftfilteranordnung, mit einem Gehäuse, welches zwei im Wesentlichen beidseits einer Gehäusemittelebene erstreckte große Seitenwände sowie eine zur Gehäusemittelebene im Wesentlichen orthogonale, die Seitenwände verbindende Umfangswand und einen Rohraumeingang sowie einen Reinraumausgang aufweist, und mit einem zwischen dem Rohraumeingang und dem Reinraumausgang wirksamen Filtereinsatz, welcher zwei im montierten Zustand des Filtereinsatzes den Seitenwänden benachbarte Bodenscheiben und eine deren Randzonen verbindende, zur Gehäusemittelebene im Wesentlichen orthogonale Filterwand aufweist, die von einer dicht an den Rohraumeingang oder den Reinraumausgang anschließbaren Öffnung durchsetzt wird.

Derartige Luftfilteranordnungen werden serienmäßig für große Dieselmotoren von Lastkraftwagen eingesetzt. Dabei kann das Gehäuse eine kofferähnliche Gestalt aufweisen, wobei vorteilhaft ist, dass eine Anpassung an vorhandene Freiräume an LKWs prinzipiell leicht möglich ist, weil die Größe der Stirnwände sowie deren Abstand voneinander an die jeweiligen Gegebenheiten angepasst werden können.

In der Regel ist die die Filterwand durchsetzende Öffnung des Filtereinsatzes dicht mit dem Reinraumausgang verbunden, so dass der Innenraum des Filtereinsatzes den Reinraum bildet. Der Abstandsraum außerhalb des Filtereinsatzes im gegenüber dem Volumen des Filtereinsatzes vergrößerten Gehäuse bildet dann den Rohraum.

Grundsätzlich ist auch eine umgekehrte Ausgestaltung denkbar, bei der der Innenraum des Filtereinsatzes den Rohraum und der den Filtereinsatz umgebende Innenbereich des Gehäuses den Reinraum bildet.

Bei allen Kraftfahrzeugen und/oder allen Motoren ist eine geringe Geräuschentwicklung äußerst erwünscht. Im Falle von Verbrennungsmotoren gilt dies insbesondere auch für die Lufteinlassseite. Bei Filteranordnungen der eingangs angegebenen Art besteht grundsätzlich das Problem, dass die vergleichsweise großen Stirnwände des Gehäuses zu Schwingungen angeregt werden können.

Filteranordnungen der eingangs angegebenen Art sind allgemein bekannt, vgl. DE 10 2004 054 274 A1, FR 2 935 102 A1, DE 198 56 520 A1, DE 103 28 002 A1, EP 0 068 662 A1, US 6,814,660 B1 WO 2006/009766 A1, JP 57-018 451 A, JP 59-119 055, US 46 40 698 A, JP 61-275 562 und DE 10 2007 024 287.

Diese Filteranordnungen besitzen ein nach Art einer Schublade in ein Gehäuseteil (erste Gehäusehälfte) einschiebbares Filterelement, wobei am Gehäuse und am Filterelement angeordnete Führungsprofile zusammenwirken und die Sollage des Filterelementes im Gehäuse vorgeben, so dass eine gewisse "Kopplung" zwischen Gehäuse und Filterelement vorliegt.

Deshalb ist es Aufgabe der Erfindung, bei einer Filteranordnung der eingangs angegebenen Art eine Bauart zu schaffen, mit der Geräusche und insbesondere Resonanzschwingungen weitestgehend ausgeschaltet werden können.

Diese Aufgabe wird erfindungsgemäß durch die kennzeichnenden Merkmale des Anspruches 1 gelöst.

Die Erfindung beruht auf dem allgemeinen Gedanken, die Seitenwände des Gehäuses und die Bodenscheiben des Filtereinsatzes jeweils zu einer Doppelwand zu kombinieren, so dass sich jeweils eine Seitenwand des Gehäuses und die benachbarte Bodenscheibe des Filtereinsatzes gegenseitig versteifen. Dabei ist vorteilhaft, dass bei eventuellen Biegeverformungen der Doppelwand, d. h. von Gehäuseseitenwand und Bodenscheibe des Filtereinsatzes, reibungsbehaftete Scherbewegungen zwischen der jeweiligen Seitenwand und Bodenscheibe auftreten, so dass eine wirksame Schwingungsdämpfung erfolgt.

Im Übrigen wird mit der Erfindung auch der Vorteil geboten, dass miteinander zusammenwirkende Profilteile zusätzlich zur Kopplung der Seitenwände und der Bodenscheiben die Funktionen einer Führung beim Austausch des Filtereinsatzes übernehmen können, so dass der jeweils verschmutzte Filtereinsatz optimal aus dem Gehäuse herausbewegt und der jeweils neue Filtereinsatz exakt in die Sollposition gebracht werden können.

Im diesem Zusammenhang kann zweckmäßig vorgesehen sein, dass das Gehäuse bezüglich einer zur Gehäusemittelebene orthogonalen Trennebene teilbar ist und dass die Achse des mit der Öffnung des Filtereinsatzes dicht verbindbaren Rohraumeinganges oder Reinraumausganges senkrecht zur Trennebene ausgerichtet ist. Damit lässt sich der Filtereinsatz unter Ausführung einer weitestgehenden geradlinigen translatorischen Bewegung aus dem Gehäuse entnehmen bzw. in das Gehäuse einsetzen.

Gemäß einer weiteren sehr vorteilhaften Ausführungsform der Erfindung kann vorgesehen sein, dass die Bodenscheiben des Filtereinsatzes innerhalb des von der Filterwand umschlossenen Raumes miteinander durch säulenartige Vorsprünge oder dergleichen, die nach Art von Steckverbindungen ausgebildet sein können, miteinander steif, insbesondere druck- und zugfest, verbunden sind.

Im Übrigen wird hinsichtlich bevorzugter Merkmale der Erfindung auf die Ansprüche und die nachfolgende Erläuterung der Zeichnung verwiesen, anhand der eine besonders bevorzugte Ausführungsform der Erfindung näher erläutert wird.

In der Zeichnung zeigt
- Fig. 1:: ein Schnittbild einer nicht beanspruchten Luftfilteranordnung, wobei die Schnittebene in eine Gehäusemittelebene fällt,
- Fig. 2:: eine teilweise geschnittene perspektivische Darstellung der nicht beanspruchten Luftfilteranordnung,
- Fig. 3:: eine perspektivische Darstellung des Filtereinsatzes,

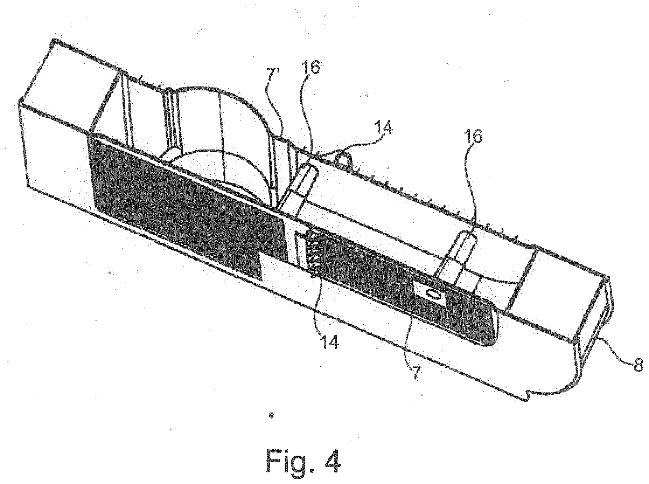

- Fig. 4:: eine geschnittene perspektivische Darstellung des Filtereinsatzes, wobei die Schnittebene mit einer Trennebene des Filtergehäuses übereinstimmt,
- Fig. 5:: ein Schnittbild von Gehäuse und Filtereinsatz, wobei die Schnittebene mit der Trennebene des Gehäuses übereinstimmt,
- Fig. 6:: verschiedene Ausführungsformen des Filtereinsatzes.
- Fig. 7:: eine perspektivische Darstellung des Filtereinsatzes einer abgewandelten Ausführungsform, wobei die an den Bodenscheiben vorgesehenen Profile zusätzlich in einer vergrößerten Ausschnittsdarstellung gezeigt werden.
- Fig. 8:: ein Schnittbild entsprechend einer zu den Seitenflächen und zur Trennebene des Gehäuses senkrechten Schnittebene,
- Fig. 9:: eine perspektivische Darstellung eines nochmals abgewandelten Filtereinsatzes und
- Fig. 10:: ein Schnittbild dieses Filtereinsatzes im Gehäuse.

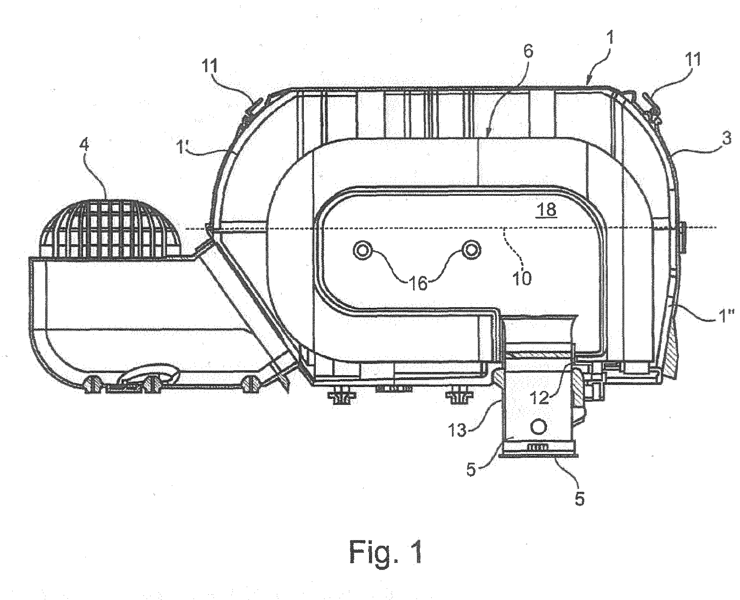

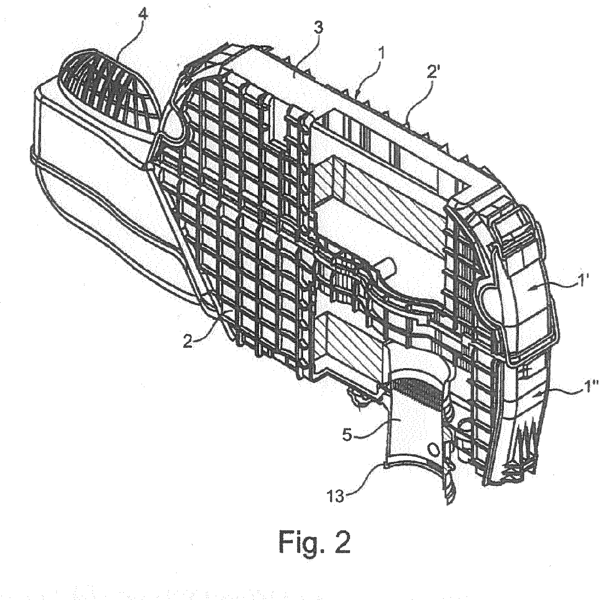

Gemäß den Fig. 1 und 2 besitzt die nicht beanspruchte Luftfilteranordnung ein Gehäuse 1 mit vergleichsweise großen Seitenflächen 2 und 2', die miteinander durch eine vergleichsweise schmale Umfangswand 3 verbunden sind. An der Umfangswand 3 sind ein Rohraumeingang 4 und ein Reinraumausgang 5 angeordnet, wobei Eingang 4 und Ausgang 5 durch einen im Gehäuse 1 angeordneten Filtereinsatz 6 getrennt werden.

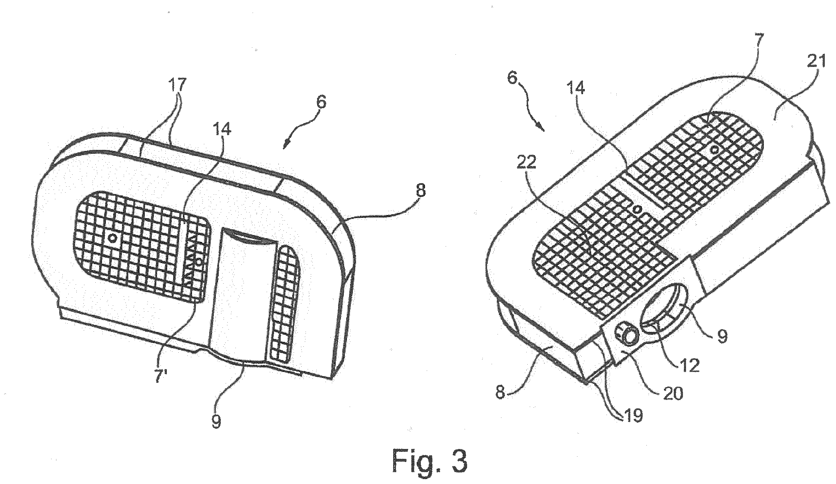

Der Filtereinsatz 6 besitzt gemäß Fig. 3 stirnseitige Bodenscheiben 7 und 7', die an ihren Randzonen durch eine nahezu umlaufende Filterwand 8 miteinander verbunden sind, die in Draufsicht auf die Bodenscheiben 7, 7'etwa sternförmig plissiert sein kann, wobei sich die Plissefalze senkrecht zu den Bodenscheiben 7, 7' erstrecken. Diese Filterwand 8 wird an einer Längsseite 19 der Bodenscheiben 7 und 7' von einer Öffnung 9 durchsetzt, welche in einer mit der Filterwand 8 und den Bodenscheiben 7, 7' dicht verbundenen Seitenscheibe 20 angeordnet ist. Im montierten Zustand des Filtereinsatzes 6 ist die Seitenscheibe 20 dicht mit dem Reinraumausgang 5 des Gehäuses 1 verbunden. Beim Betrieb strömt also ungereinigte Luft durch den Rohraumeingang 4 in das Gehäuse 1 ein, durchströmt sodann die Filterwand 8 und gelangt damit in den den Reinraum bildenden Innenraum 18 des Filtereinsatzes 6, wobei Verschmutzungen von der Filterwand 8 zurückgehalten werden. Dementsprechend tritt dann gereinigte Luft aus dem Reinraumausgang 5 aus.

Das Gehäuse 1 ist an einer zu den Seitenflächen 2 und 2' bzw. zu einer Gehäusemittelebene zwischen den Seitenflächen 2 und 2' im Wesentlichen orthogonalen Trennebene 10 teilbar, wobei ein in Fig. 2 oberer Gehäuseteil 1' mit dem in Fig. 2 unteren Gehäuseteil 1" über kniehebelartige Spannhebel 11 fest verbindbar ist.

Wenn das Gehäuse 1 geöffnet wird, das heißt wenn der obere Gehäuseteil 1' nach Öffnen der Spannhebel 11 vom unteren Gehäuseteil 1" entfernt worden ist, lässt sich der Filtereinsatz 6 nach Art einer Schublade aus dem unteren Gehäuseteil 1" herausziehen bzw. in den unteren Gehäuseteil einschieben, wobei eine Dichtung 12 am Innenrand der Öffnung 9 des Filtereinsatzes 6 dichtend auf den Außenumfang eines den Reinraumausgang 5 bildenden Rohrstutzens 13 im Innenraum des unteren Gehäuseteiles 1" geschoben bzw. von diesem Rohrstutzen 13 getrennt wird.

Im montierten Zustand des Filtereinsatzes 6 haben dessen Bodenscheiben 7 und 7' eine zu den Innenseiten der Stirnflächen 2 und 2' des Gehäuses 1 benachbarte im wesentlichen parallele Lage.

Es ist vorgesehen, dass die Bodenscheiben 7 und 7' des Filtereinsatzes 6 gemäß einer nicht beanspruchten Ausführungsform der Erfindung mit den Innenseiten der Seitenflächen 2 und 2' des Gehäuses 1 formschlüssig verbunden sind. Hierzu dienen auf den Außenseiten der Bodenscheiben 7 und 7' bzw. auf den Innenseiten der Seitenflächen 2 und 2' angeordnete, ineinander greifende Winkelprofile 14 und 15, welche so ausgerichtet sind, dass sie auch als Schiebeführungen beim Einschieben des Filtereinsatzes 6 in das Gehäuse 1 bzw. beim Herausziehen des Filtereinsatzes 6 aus dem Gehäuse 1 dienen.

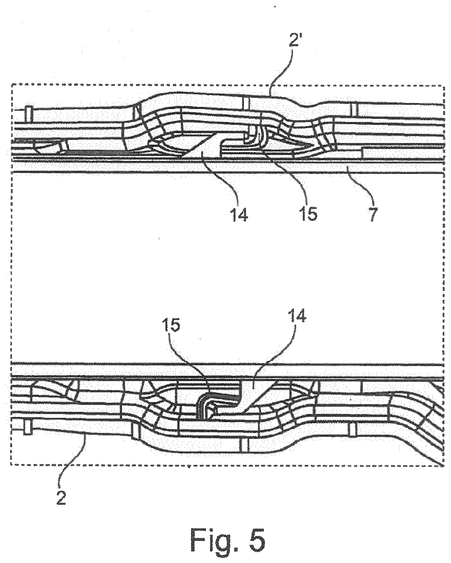

Wie insbesondere der Fig. 5 entnommen werden kann, sind die Winkelprofile 14 auf den voneinander abgewandten Außenseite der Bodenscheiben 7 und 7' entgegengesetzt ausgebildet, das heißt der freie Rand des in Fig. 5 oberen Winkelprofils 14 weist nach rechts, während der freie Rand des in Fig. 5 unteren Winkelprofils 14 nach links gerichtet ist. Entsprechend umgekehrt sind die freien Ränder der gehäuseseitigen Winkelprofile 15 ausgerichtet. Die am Filtereinsatz 6 angeordneten Winkelprofile 14 durchsetzen im montierten Zustand des Filtereinsatzes 6 die Trennebene 10 des Gehäuses, so dass sie sowohl mit gehäuseseitigen Winkelprofilen 15 am unteren Gehäuseteil 1" als auch am oberen Gehäuseteil 1' zusammenwirken.

Die Bodenscheiben 7 und 7' verfügen über einen Randbereich 21 und einen Mittenbereich 22. Im Randbereich 21 sind die Bodenscheiben 7, 7' eben ausgeführt. Dies ist besonders vorteilhaft, wenn die Bodenscheiben 7, 7' zur dichtenden Verbindung mit der Filterwand 8 plastifiziert werden. Somit kann ein gleichmäßiger Wärmeeintrag ohne Störkonturen erfolgen. Der Mittenbereich 22 kann zur Versteifung der Bodenscheibe 7, 7' verrippt ausgeführt sein. Außerdem ist es vorteilhaft, wenn die Winkelprofile 14 in dem Mittenbereich 22 angeordnet sind. Somit ist die Bodenscheibe 7, 7' in diesem Bereich, in welchem die Bodenscheibe 7, 7' aufgrund der Größe die geringste Eigensteifigkeit aufweist, mit dem Gehäuse 1 verbindbar. Bei dem dargestellten Filtereinsatz 6 verfügt jede Bodenscheibe 7, 7' über ein mittig angeordnetes Winkelprofil 14. Bei anderen Ausführungen können auch zwei oder mehr Winkelprofile 14 je Bodenscheibe vorgesehen sein. Diese können zueinander fluchtend, in Reihe oder versetzt zueinander angeordnet sein. Hierbei ist jedem Winkelprofil 14 ein Gegenwinkelprofil 15 am Gehäuse 6 zugeordnet. Alternativ können jedoch auch mehrere Winkelprofile 14 vorgesehen sein, wobei nur eine Teilmenge der Winkelprofile 14 mit einem Winkelprofil 15 des Gehäuses 6 korrespondiert.
Bei der dargestellten Ausführung, insbesondere gemäß Figur 3, ist ein Winkelprofil 14 vorgesehen, welches mit dem unteren Gehäuseteil 1 " und mit dem oberen. Gehäuseteil 1' korrespondiert. Somit werden die Gehäuseteile 1', 1 " durch den Filtereinsatz 6 zusätzlich zu anderen geometrischen Ausgestaltungen, zueinander zentriert.

Gemäß anderen, nicht dargestellten erläuternden Beispielen der nicht erfindungsgemäßen Luftfilteranordnung können alternativ zu den Winkelprofilen 14 auch andere, insbesondere punktuelle Führungselemente, wie z.B. Pilzköpfe vorgesehen sein, welche in punktuelle oder durchgehende Führungsaufnahmen in dem Gehäuse 6 aufgenommen werden können.

Im Ergebnis wirken damit die Seitenwände 2 und 2' des Gehäuses 1 sowie die Bodenscheiben 7 und 7' des Filtereinsatzes 6 unter gegenseitiger Versteifung miteinander unter Bildung eines zug- und druckbelastbaren doppelwandigen Verbundes zusammen.

Dieser Effekt wird noch dadurch verstärkt, dass zwischen den Bodenscheiben 7 und 7' innerhalb des von der Filterwand 8 umschlossenen Raumes säulenartige Verbindungskörper 16 vorgesehen sind. Dabei kann jeweils eine Hälfte eines Verbindungskörpers 16 an der einen Bodenscheibe 7 und die andere Hälfte des jeweiligen Verbindungskörpers 16 an der anderen Bodenscheibe 7' angeformt sein und mit der jeweils anderen Hälfte eine unlösbare Steckverbindung bilden, derart, dass die Bodenscheiben 7 und 7' über die Verbindungskörper 16 auf Zug und Druck belastbar verbunden sind. Bei anderen Ausgestaltungen kann der Verbindungskörper auch vollständig an einer Bodenscheibe 7oder 7' angeordnet sein und sich an der gegenüberliegend angeordneten Bodenscheibe 7' bzw. 7 abstützen. Hierzu ist vorzugsweise an dieser gegenüberliegenden Bodenscheibe eine Aufnahme angeordnet, in welche der Verbindungskörper 16 eingreift.

Die Ränder 17 (vgl. Fig. 3) an den von der Öffnung 9 abgewandten Seiten der Bodenscheiben 7 und 7' können gegebenenfalls mit Anschlagflächen, welche an den Innenseiten der Stirnflächen 2 und 2' am oberen Gehäuseteil 1' angeordnet sind, zusammenwirken. Die Anschlagflächen können z.B. als Stufen oder sonstige geometrische Verengungen des Innenraumes des Gehäuses 1 ausgebildet sein. Somit wird der Filtereinsatz 6 automatisch in seine Sollendlage gedrängt wird, wenn der obere Gehäuseteil 1' am unteren Gehäuseteil 1" angesetzt und die Spannhebel 11 geschlossen werden.

Im Übrigen können in den Seitenflächen 2 und 2' des Gehäuses 1 Sicken oder dergleichen angeordnet sein (nicht dargestellt), derart, dass auf der Innenseite der genannten Seitenflächen Vorsprünge gebildet werden, die mit Vertiefungen auf den Bodenscheiben 7 und 7' des Filtereinsatzes 6 rastartig zusammenwirken. Damit kann eine besonders feste Halterung des Filtereinsatzes 6 im Gehäuse 1 gewährleistet werden.

Grundsätzlich können das Gehäuse 1 und der Filtereinsatz 6 unterschiedliche, aneinander angepasste Formen haben. Im Wesentlichen muss nur gewährleistet sein, dass im montierten Zustand der Filteranordnung zwischen der Innenseite der Umfangswand 3 des Gehäuses und der Filterwand 8 des Filtereinsatzes 6 ein Abstandsraum verbleibt, über den möglichst alle Zonen der Filterwand 8 mit dem Rohraumeingang 4 kommunizieren.

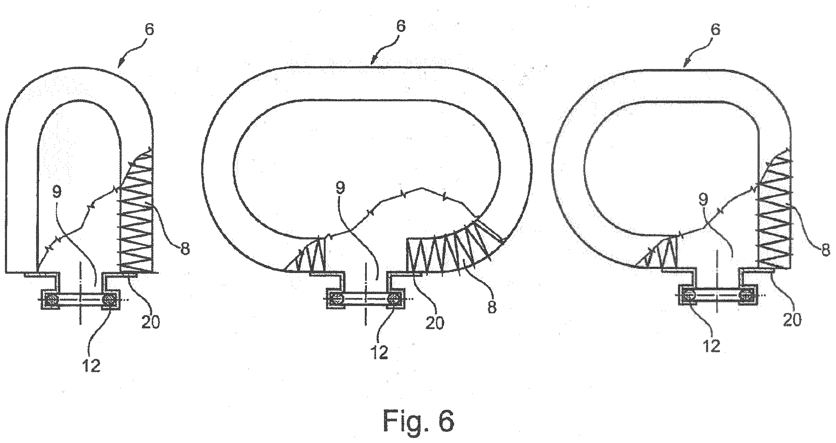

Die Fig. 6 zeigt schematisiert unterschiedliche Formen des Filtereinsatzes 6, wobei dann das Gehäuse 1 entsprechend angepasst ausgeformt wird. Im Übrigen zeigt die Fig. 6 beispielhaft, dass die Filterwand 8, zur Vergrößerung der Filterfläche, im Wesentlichen aus einem plissierten Streifen aus Filtermaterial, insbesondere aus zellulosehaltigem Filterpapier oder einem polymeren Filtervlies, bestehen kann, welcher über die mit dem Filtermaterialstreifen dicht verbundene Seitenscheibe 20 ringförmig geschlossen ist. Hierbei sind beliebige Außengeometrien des Filtereinsatzes 6, wie z.B. rund, oval, polygon, nierenförmig, realisierbar, wobei durch das Filtermaterial und die Bodenscheiben ein Innenvolumen gebildet wird. Das Innenvolumen steht somit für den Durchtritt von zu reinigender Luft zur Verfügung. In der Darstellung der Fig. 6 haben die durch das plissierte Filtermaterial verbundenen Randzonen der Bodenscheiben 7 und 7' beispielhaft U-Form bzw. C-Form oder G-Form (bei Betrachtung von links nach rechts).

Um das Einschieben des Filtereinsatzes 6 in den unteren Gehäuseteil 1" bzw. das Aufschieben des oberen Gehäuseteiles 1' auf den in den unteren Gehäuseteil 1" eingeschobenen Filtereinsatz 6 zu erleichtern, können an den Längsenden der Profile 14 des Filtereinsatzes und/oder an den der Trennebene 10 benachbarten Längsenden der gehäuseseitigen Profile 15 Einführschrägen angeordnet sein.

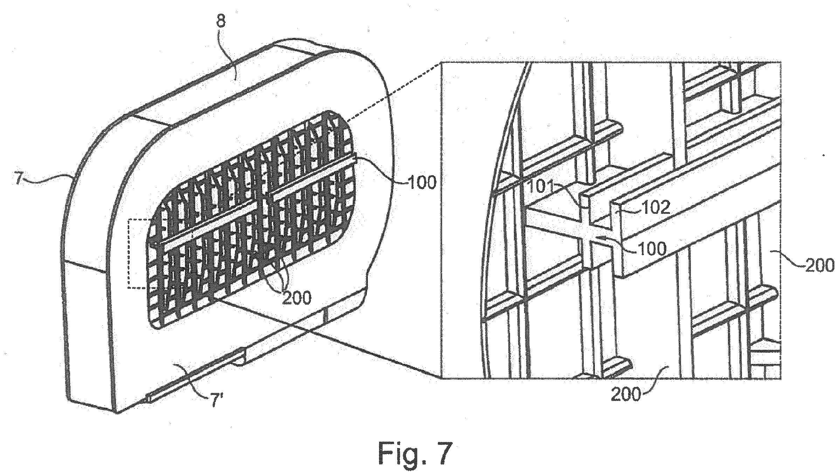

Auch bei der in Fig. 7 dargestellten erfindungsgemäßen Ausführungsform ist vorgesehen, dass die Bodenscheiben 7 und 7' des Filtereinsatzes 6 mit den Innenseiten der Seitenflächen 2 und 2' des Gehäuses 1 formschlüssig verbunden sind. Hierzu dienen auf den Außenseiten der Bodenscheiben 7 und 7' angeordnete Profile, die mit passenden Gegenprofilen an den trennebenenseitigen Rändern der Seitenflächen 2 und 2' des Gehäuses 1 zusammenwirken.

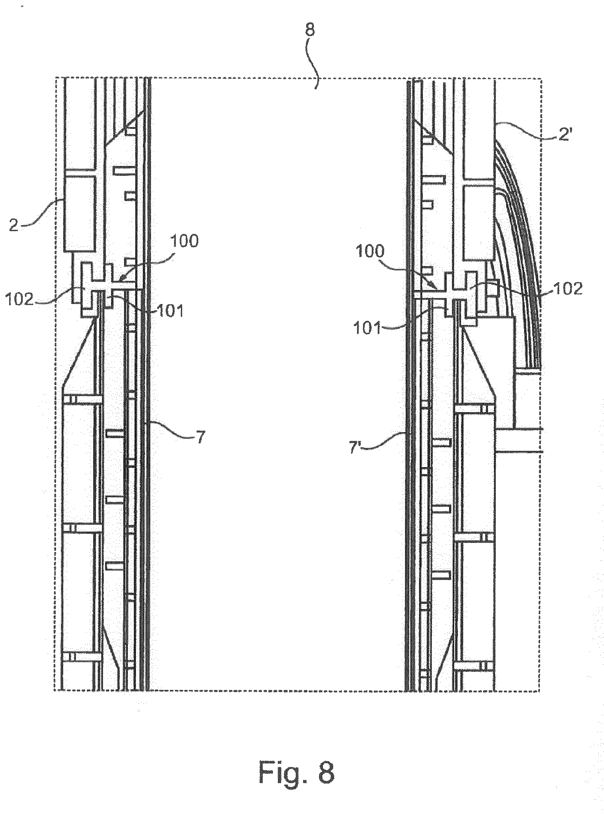

An den im montierten Zustand der Filteranordnung von der Trennebene 10 durchsetzten Zonen der Bodenscheiben 7 und 7' des Filtereinsatzes 6 sind außenseitige Profilleisten 100 vorgesehen, die gemäß Fig. 8 als Doppel-T-Profile ausgebildet sind. An den trennebenenseitigen Rändern der Seitenflächenteile der Gehäuseteile 1' und 1" sind dazu passende Gegenprofile vorgesehen. Am Seitenflächenteil des oberen Gehäuseteiles 1' ist ein unsymmetrisches U-Profil vorgesehen, welches mit einem relativ kurzen Schenkel zwischen die Gurte 101 und 102 des Doppel-T-Profils der Profilleiste 100 hineinragt und mit einem vergleichsweise langen U-Schenkel die von der Bodenscheibe 7 bzw. 7' abgewandte Seite des Gurtes 102 überdeckt. Am trennebenenseitigen Rand des Seitenflächenteils des unteren Gehäuseteiles 1" ist ein Winkelprofil vorgesehen, welches mit einem in der Ebene der Seitenfläche erstreckten Schenkel zwischen die Gurte 101 und 102 der Profilleiste 100 hineinragt und mit einem dazu orthogonalen Schenkel den in der Zeichnung nach abwärts gewandten Rand des Gurtes 102 überdeckt.

Auf diese Weise wird im montierten Zustand der Luftfilteranordnung der Gurt 102 der Profilleiste 100 vollständig von Profilteilen an den trennebenenseitigen Rändern der Seitenflächenteile der Gehäuseteile 1' und 1" umfasst.

Darüber hinaus können außenseitig an den Bodenscheiben 7 bzw. 7' zur Profilleiste 100 senkrechte Rippen bzw. Stege 200 angeordnet sein, die einerseits die Bodenscheiben 7 und 7' ober- und unterhalb der Profilleisten 100 versteifen und andererseits beim Zusammenbau des Gehäuses 1 als innenseitige Führungen für die am oberen bzw. unteren Gehäuseteil 1' bzw. 1" angeordneten Teile der Seitenflächen 2 und 2' dienen, wobei im montierten Zustand der Filteranordnung diese Stege bzw. Rippen 103 auch eine Abstützung bzw. Versteifung der Seitenflächen 2 und 2' bewirken.

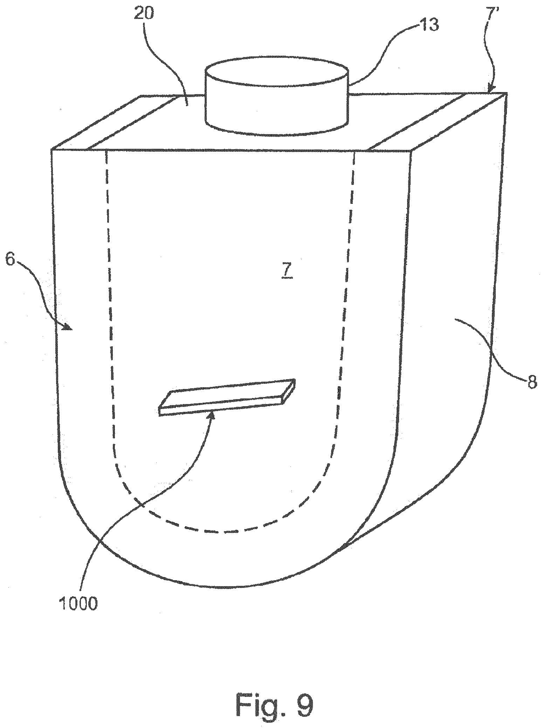

Im Übrigen können die Bodenscheiben 7 und 7' noch zusätzlich durch auf ihren Außenseiten gitterförmig angeordnete Stege versteift sein. Ähnliche Stege können auch auf den Außenseiten der Seitenflächen 2 und 2' des Gehäuses 1 vorgesehen sein.
Bei der Ausführungsform der Fig. 9 sind auf den Bodenscheiben 7, 7' des dargestellten Filtereinsatzes 6 Stege 1000 angeordnet.

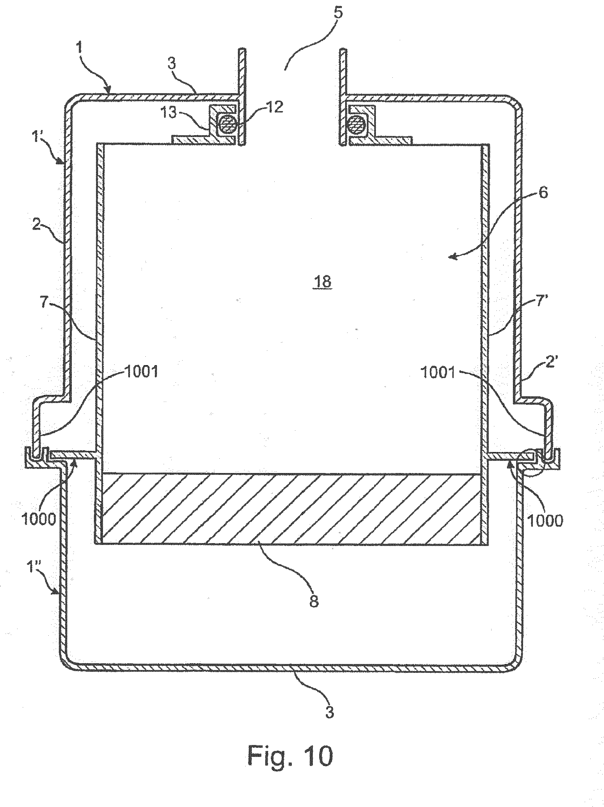

Gemäß Fig. 10 ragen diese Stege 1000 im montierten Zustand der Filteranordnung im Bereich der Trennebene zwischen den Gehäuseteilen 1', 1" in einen von den trennebenenseitigen Rändern der Seitenflächen 2, 2' gebildeten Kanal 1001, wobei die Stege 1000 einerseits mit Druck auf dem trennebenenseitigen Rand des unteren Gehäuseteils 1" aufliegen können und andererseits mit ihren freien Längsrändern an der Innenseite der Verbindungszone der Gehäuseteile 1', 1" anliegen und damit die Seitenwände 2, 2' nach einwärts abstützen.

Werden die Gehäuseteile 1', 1" voneinander getrennt, können die Stege 1000 als Griffleisten genutzt werden, um den Filtereinsatz 6 aus dem in der Zeichnung oberen Gehäuseteil 1' herauszuziehen bzw. in diesen einzuschieben.

Aus Fig. 10 ist des Weiteren ersichtlich, dass die in das obere Gehäuseteil 1' eingeschobene Lage des Filtereinsatzes 6 am Reinraumausgang 5 durch Anschlag des den Reinraumausgang umfassenden Rohrstutzens 13 an der Innenseite der Umfangswand 3 des Gehäuses 1 begrenzt wird.

Der Filtereinsatz der Fig. 10 und 11 entspricht weitestgehend dem linken Bild in Fig. 6.

## Patentansprüche

1. Filteranordnung, insbesondere Luftfilteranordnung, mit einem Gehäuse (1), welches zwei im Wesentlichen beidseits einer Gehäusemittelebene erstreckte große Seitenwände (2, 2') sowie eine zur Gehäusemittelebene im Wesentlichen orthogonale, die Seitenwände (2, 2') verbindende Umfangswand (3) und einen Rohraumeingang (4) sowie einen Reinraumausgang (5) aufweist, und mit einem zwischen dem Rohraumeingang (4) und den Reinraumausgang (5) wirksamen Filtereinsatz (6), welcher zwei im montierten Zustand des Filtereinsatzes (6) den Seitenwänden (2, 2') benachbarte Bodenscheiben (7, 7') und eine deren Randzonen verbindende, zur Gehäusemittelebene im Wesentlichen orthogonale Filterwand (8) aufweist, die von einer dicht an den Rohraumeingang (4) oder den Reinraumausgang (5) anschließbaren Öffnung (9) durchsetzt wird,
**dadurch gekennzeichnet,**
**dass** die Seitenwände (2, 2') mit den Bodenscheiben (7, 7') im montierten Zustand des Filtereinsatzes (6) durch miteinander zusammenwirkende, an den Seitenwänden (2, 2') bzw. den Bodenscheiben (7, 7') angeordnete oder angeformte Profilteile (100 bis 102) zur Ausschaltung von Geräuschen, insbesondere von Resonanzschwingungen, zu einer Doppelwand gekoppelt sind,
**dass** die Profilteile (100) als zur Trennebene (10) parallele Profilleisten (100 bis 102) ausgebildet sind, und
**dass** die Profilleisten (100) ein T- bzw. Doppel-T-Profil aufweisen.

2. Filteranordnung nach Anspruch 1,
**dadurch gekennzeichnet,**
**dass** beidseitig der Profilleisten (100) dazu im Wesentlichen orthogonale Stege oder Rippen (200) auf den Bodenscheiben (7, 7') angeordnet sind.

3. Filteranordnung nach Anspruch 1 oder 2,
**dadurch gekennzeichnet,**
**dass** ein von der jeweiligen Bodenscheibe (7, 7') entfernter Gurt des T- bzw. Doppel-T-Profils im zusammengebauten Zustand der Filteranordnung von Gegenprofilen an den trennebenenseitigen Rändern der Seitenflächenteile der Gehäuseteile (1', 1") im Wesentlichen vollständig umschlossen wird

4. Filteranordnung nach Anspruch 3,
**dadurch gekennzeichnet,**
**dass** zumindest ein Profilsteg der Gegenprofile zwischen die Gurte des Doppel-T-Profils einschiebbar ist.

5. Filteranordnung nach Anspruch 3 oder 4,
**dadurch gekennzeichnet,**
**dass** zumindest ein Profilsteg der Gegenprofile in einen Abstandsraum zwischen einem Gurt der T-bzw. Doppel-T-Profile und den auf den Bodenscheiben (7, 7') angeordneten Querrippen bzw. Querstegen einschiebbar ist.

## Claims

1. A filter arrangement, in particular air filter arrangement, having a housing (1), which comprises two large side walls (2, 2') substantially extended on both sides of a housing center plane and a circumferential wall (3) that is substantially orthogonal to the housing center plane and connecting the side walls (2, 2') and an untreated space inlet (4) as well as a clean space outlet (5) and having a filter insert (6) that is effective between the untreated space inlet (4) and the clean space outlet (5), which comprises two bottom discs (7, 7') that are adjacent to the side walls (2, 2') in the assembled state of the filter insert (6) and an orthogonal filter wall (8) connecting the marginal zones of said bottom discs (7, 7') which is substantially orthogonal to the housing center plane, which is penetrated by an opening (9) that can be tightly connected to the untreated space inlet (4) or the clean space outlet (5),
**characterized in that**
the side walls (2, 2') are coupled with the bottom discs (7, 7') in the assembled state of the filter insert (6) through interacting profile parts (100 to 102) arranged or molded on to the side walls (2, 2') or the bottom discs (7, 7') into a double wall, to neutralize noises, in particular resonance vibrations,
that the profile parts (100) are designed as profile strips (100 to 102) that are parallel to the parting plane (10), and
that the profile strips (100) have a T- or double T-profile.

2. The filter arrangement according to Claim 1,
**characterized in that**
on both sides of the profile strips (100) webs or ribs (200) which are substantially arranged orthogonal thereto are arranged on the bottom discs (7, 7').

3. The filter arrangement according to Claim 1 or 2,
**characterized in that**
a flange of the T or double T-profile that is distant from the respective bottom disc (7, 7') in the assembled state of the filter arrangement is substantially completely enclosed by mating profiles on the margins of the lateral surface parts of the housing parts (1', 1") on the parting plane side.

4. The filter arrangement according to Claim 3,
**characterized in that**
at least one profile web of the mating profiles can be pushed in between the flanges of the double T-profile.

5. The filter arrangement according to Claim 3 or 4,
**characterized in that**
at least one profile web of the mating profiles can be pushed in between a flange of the T or double T-profiles and the transverse ribs or transverse webs arranged on the bottom discs (7, 7').

## Revendications

1. Dispositif de filtre, notamment dispositif à filtre à air, comportant un logement (1), qui présente deux grandes parois latérales (2, 2') étendues essentiellement des deux côtés d'un plan médian de logement ainsi qu'une paroi périphérique (3) reliant les parois latérales (2, 2'), essentiellement orthogonale et une entrée d'espace brut (4) ainsi qu'une sortie d'espace purifié (5), et comportant une cartouche filtrante (6) efficace entre l'entrée d'espace brut (4) et la sortie d'espace purifié (5), qui qui présente deux disques de fond (7, 7') voisins des parois latérales (2, 2') en l'état monté de la cartouche filtrante (6) et une paroi de filtre (8) essentiellement orthogonale au plan médian de logement, reliant les zones de bord de ces dernières, qui est traversé par une ouverture (9) pouvant être raccordée de manière étanche à l'entrée d'espace brut (4) ou à la sortie d'espace purifié (5),
**caractérisé en ce que**
les parois latérales (2, 2') sont couplées aux disques de fond (7, 7') en l'état monté de la cartouche filtrante (6) par des baguettes de profilés (100 à 102) disposées ou façonnées sur les parois latérales (2, 2'), respectivement les disques de fond (7, 7'), coopérant les uns avec les autres afin d'exclure des bruits, notamment des oscillations de résonance,
en une double paroi, les parties de profilés (100) sont conçues comme des baguettes de profilés (100 à 102) parallèles par rapport au plan de séparation (10),
les baguettes de profilés (100) présentent en profil en T ou un profil en T double.

2. Dispositif de filtre selon la revendication 1,
**caractérisé en ce que**
des deux côtés des baguettes de profilé (100) des gradins ou nervures (200) essentiellement orthogonaux sont disposés sur les disques de fond (7, 7').

3. Dispositif de filtre selon la revendication 1 ou 2,
**caractérisé en ce**
**qu'**une courroie du profilé en T ou en double T éloignée du disque de fond respectif (7, 7') en l'état assemblé du dispositif de filtre est essentiellement complètement enveloppée par des contreprofilés sur les bords du côté du plan de séparation des parties de surfaces latérales des parties de logement (1', 1").

4. Dispositif de filtre selon la revendication 3,
**caractérisé en ce**
**qu'**au moins un gradin de profilé des contreprofilés peut être glissé entre les courroies du profilé en double T.

5. Dispositif de filtre selon une des revendications 3 ou 4,
**caractérisé en ce**
**qu'**au moins un gradin de profilé des contreprofilés peut être glissé dans un espace d'écartement entre une courroie du profilé en T ou en double T et sur les nervures transversales, respectivement les gradins transversaux disposés sur les disques de fond (7, 7').
